# EUROPEAN PATENT APPLICATION

(11) **EP 2 738 737 A1**
(43) Date of publication of application: **04.06.2014**
(21) Application number: 12306437.0
(22) Date of filing: 19.11.2012
(51) Int. Cl.: G06T 3/60, G06F 17/30, H04N 19/00

(54) **method and device for accessing slice images and sub-volumes in compressed 3D volume data**

(71) Applicant: Université de Nice, 06130 Nice Cedex 2 (FR); Centre National de la Recherche Scientifique, 75794 Paris Cedex 16 (FR)
(72) Inventor: Antonini, Marc, 06200 NICE (FR); Meftah, Anis, 06220 VALLAURIS (TN); Hidd Fonteles, Leonardo, 06000 NICE (FR)
(74) Representative: Lopez, Frédérique

(57) **Abstract**

The present invention provides a method and system for storing a multi-dimensional digital data object. A multi-scale transform function is applied to the multi-dimensional object to generate a plurality of high and low frequency data sub-bands. High frequency data sub-bands are rotated in one or several of the multi-dimensions. The rotated and the non-rotated data sub-bands are assembled into a data bit stream. The multi-dimensional digital data object is then saved as a data bit stream. The invention allows applying a reverse method to the data bit stream to reconstruct the multi-dimensional digital data object.

## Description

### Technical Field

This patent relates to the field of digital data processing and more particularly to the field of processing huge volume of multi-dimensional digital data.

### Background Art

Thanks to the spectacular development of acquisition systems, more and more detailed 3D volume data are acquired. Known scans systems such as for example, the positron emission tomography (PET), the single-photo emission computed tomography (SPECT) scans in the medical field or other systems developed for the seismic surveys provide high detailed 3D objects.

Seismic survey is a technique largely used for oil finding as it reduces the exploratory drilling by giving 3D images representing the scanned area. It consists in sending sound waves through the layers of rocks beneath the Earth and recording the energy that is bounced back by the rock layers below the surface. Current seismic surveys provide detailed 3D images having a resolution easily exceeding 10000*10000 pixels per plane.

These 3D data have huge sizes which easily exceed many terabytes and can reach the petabyte. A problem arises when one needs to process and visualize these very huge volumes of data. Visualization or compression of such 3D object requires loading it entirely in memory before processing, and due to its huge size, this operation is impossible using standard computers. Some techniques require loading the object partially and processing independently each partial area of the 3D volume.

However, the data loading time may vary significantly depending on the way the data have been stored on the computer.

The usual method of storing a multidimensional array of data is a linear allocation whereby the array is laid out linearly by a nested transversal of the axes in some predetermined order.

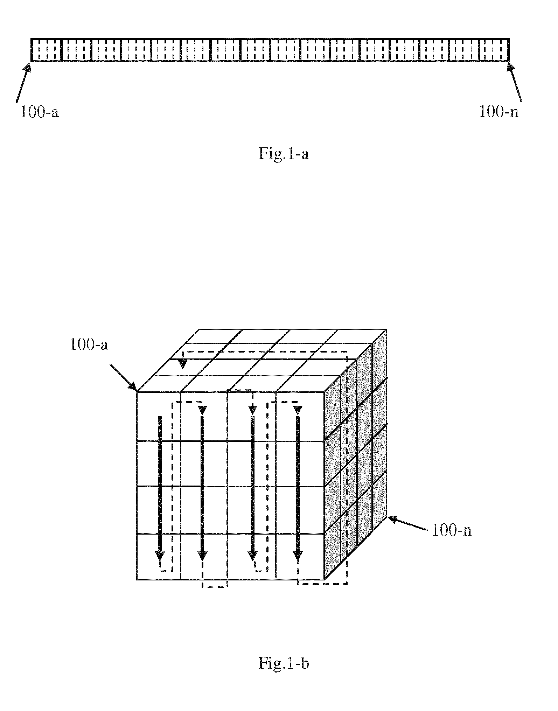

For example, in the seismic field, 3D volume data are currently stored according to the path defined by the seismic traces. Figure 1(a) shows how a 3D seismic data volume is stored in a hard disk drive as a n-data bit stream (100-a to 100-n) and Figure 1(b) depicts the spatial representation of these data. As data storage has a predetermined layout, each spatial data retrieval is linked to a different hard disk drive access way. This has a wide impact on the data loading time. There are four main reading patterns for application data analysis:
- Read all of a single variable
- Read an arbitrary sub volume
- Read an arbitrary full plan
- Read multiple elements together.

Other reading patterns are either composed of a mixture of these four basic patterns or of minor variations.

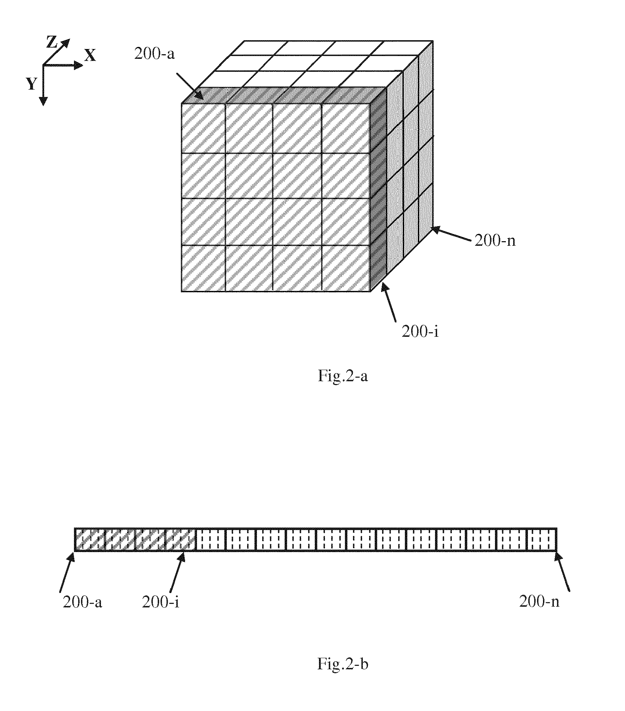

Figures 2 to 4 show three examples of plane data retrieval according to three different spatial directions and their corresponding representations in the hard disk drive.

One can easily understand that the first access as shown on Figure 2-a according to XY plane has the shortest loading time because the data to be retrieved are arranged consecutively (200-a to 200-i).

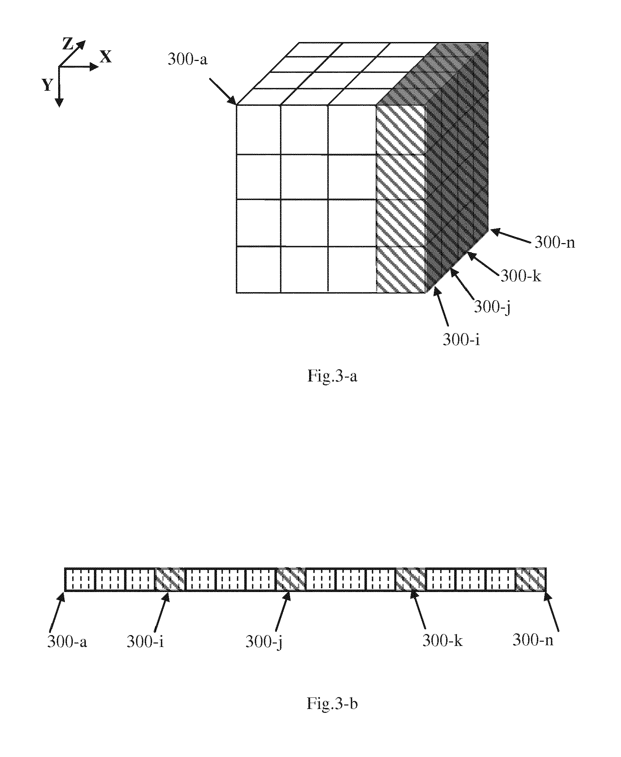

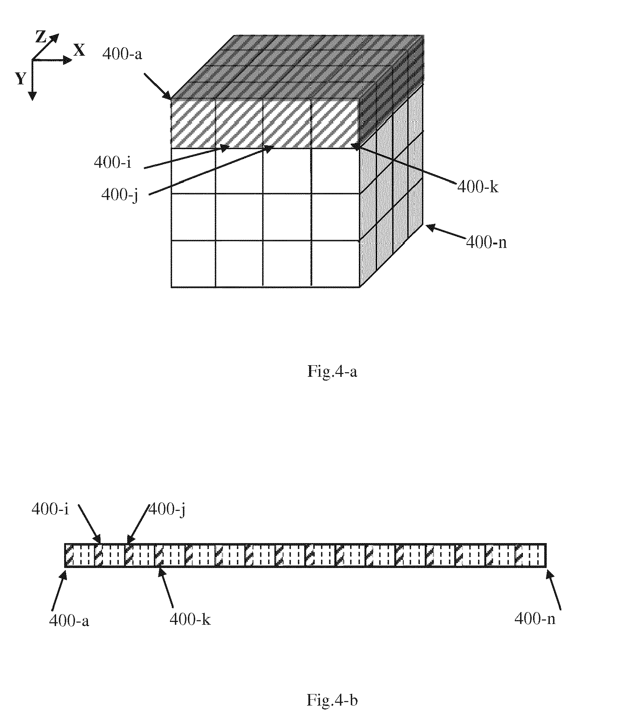

On contrary, the example shown on figure 3(a) requires more loading time as the data to be retrieved are partially fragmented in the hard disk drive (300-i, 300-j, 300-k, 300-n). The example of figure 4-a shows the worst loading time as all data to be retrieved are fragmented (400-a, 400-i, 400-j, 400-k).

Then there is the drawback with the existing methods that the loading time of data to be retrieved may vary considerably.

Furthermore there is also the drawback that the loading time may be too long preventing or prohibiting then any processing of the data.

There are three main techniques known to reduce the loading time:
- Redundancy: it consists in storing redundant copies of the data which are organized differently for different patterns access as explain in the paper of S. Frey and T. Ertl titled "Load Balancing Utilizing Data Redundancy in Distributed Volume Rendering" in Proceedings of EGPGV pp. 51-60, 2011. Depending on the orientation of the desired data the appropriate file is utilized. While being satisfactory, this solution has an important overhead. And because of the huge volume of data, it is not possible to duplicate the data because of memory limitations.
- Partitioning: it consists in increasing the number of concurrent storage devices and distributing the data among them as detailed in the paper of A. Darte and al. titled "Generalized multipartitioning for multi-dimensional arrays" in Proceedings of the International Parallel and Distributed Processing Symposium, 2002. This method allows reducing the loading time only for a specific data orientation where according parameters can be retrieved simultaneously from the different storage devices. However, if the data are located in only one storage device, the problem remains the same.
- Chunking: Sarawagi et al. in "The Efficient Organization of Large Multidimensional Arrays" published in Proceedings of the Tenth International Conference on Data Engineering, pp 328-336, 1994 introduced "chunking" as a way to improve access to multidimensional arrays stored in files. It consists in breaking down data into chunks. Chunked data have got same size but are organized differently. Many other techniques use chunks as a unit of storage for data, such as in "Optimizing Retrieval and Processing of Multi-Dimensional Scientific Datasets" from Chang, C. and al. published in Proc. of the Third Merged IPPS/SPDP Symposiums. IEEE Computer Society Press, Los Alamitos, 2000 or as a unit of communication between a server that contains the data and clients that visualize them such as described in the article of Wetzel and al. "Representation and Performance Issues in Navigating Visible Human Datasets" in: Proc. Third Visible Human Project Conference, NLM/NIH, 2000. The shape of the chunk is optimized to minimize the average number of blocks fetched for a given pattern. More recent chunking methods combine all the last techniques to improve global performances like the approach of Y. Tian et al. in "EDO: Improving Read Performance for Scientific Applications through Elastic Data Organization" published in IEEE International Conference on Cluster Computing (CLUSTER), pp. 93 - 102, 2011.

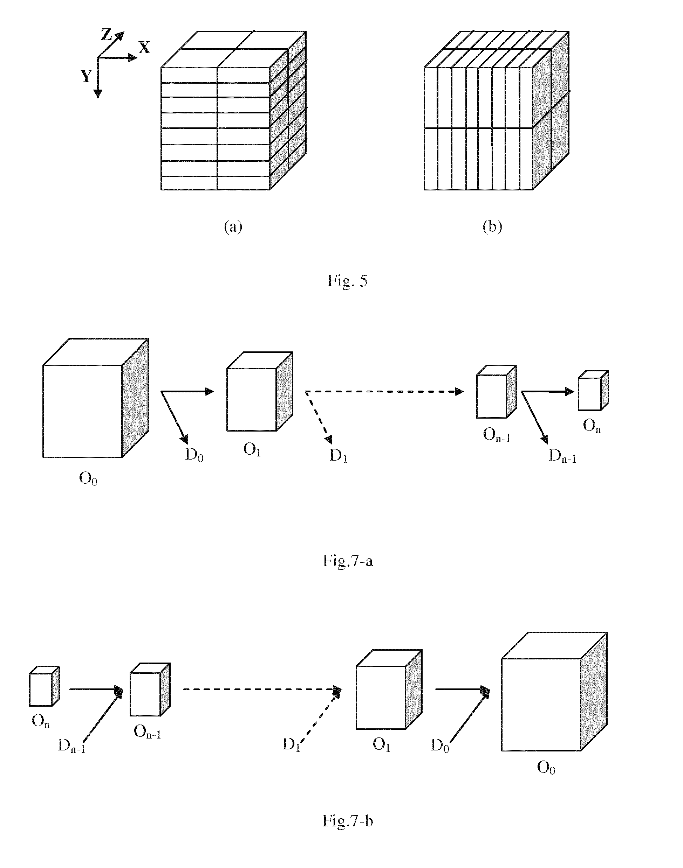

However, the results of the chunking techniques depend on the shape of the chunk. For example, Figure 5 shows two decompositions of a 3D volume using two different chunks. The chunk shown on the left side (a) is optimized for data loading according to X axis while the chunk shown on the right side (b) is optimized for data loading according to Y axis.

Finally, none of the existing methods is satisfactory to solve the loading time problem. Indeed, either an important overhead is added or the method does not apply to all data retrieval patterns or the method is only optimized for a specific chunk pattern.

Thus, there is the need of a solution to solve the aforementioned problems. The present invention offers such solution.

### Summary of the invention

An object of the invention is to provide a method and system to handle very large n-dimensions digital datasets.

It is another object of the invention to provide a method to reduce data accessing time while enabling an average loading time whatever the spatial direction used to retrieve the data.

A further object of the present invention is to provide a method for loading huge volume of data that remains independent from the method for storing such data and uncorrelated from the data storage organization.

Yet another object of the present invention is to offer a system and method that provide an average loading time of the data in the n-dimensions without adding a data overhead.

According to a first embodiment of the present invention, there is provided a method as further described in the appended independent claim 1.

Particularly, a computer implemented method of storing a multi-dimensional digital data object comprises the steps of:
- applying a multi-scale transform function to the multi-dimensional object to generate a plurality of high and low frequency data sub-bands;
- identifying at least one set of the high frequency data sub-bands to be rotated in one of the multi-dimensions;
- generating at least one header file containing the identification and rotation data sub-bands information;
- performing the rotation of the identified at least one set of high frequency data sub-bands;
- assembling the rotated and non-rotated data sub-bands into a data bit stream;
- linking the data bit stream with the at least one header file; and
- storing the data bit stream and the at least one header file.

Further embodiments are described in the appended dependent claims.

Particularly, in an embodiment, the multi-dimensional digital data object is a 3D object and the multi-scale transform function consists in applying an n-levels filtering.

In another embodiment, the multi-scale transform function is a multi-level wavelet transform function and the rotation step consists in rotating a first set and a second set of high frequency data sub-bands according to two dimensions among the three dimensions of a 3D object.

According to another embodiment of the invention, a computer implemented method of loading a multi-dimensional digital data object stored in the form of a data bit stream along with at least one header file comprises the steps of:
- identifying from the at least one header file the plurality of data sub-bands of the data bit stream;
- reading from the at least one header file the rotation information of each data sub-band;
- applying an inverse rotation to each data sub-band;
- applying an inverse multi-scale transform function on all the data sub-bands to reconstruct the multi-dimensional digital data object.

According to yet another embodiment of the present invention there is provided an apparatus comprising means adapted for carrying out each step of the method according to the different embodiments of the invention.

There is also provided a computer readable medium having encoded thereon a computer program comprising instructions for carrying out the steps of the method of the invention when the computer program is executed on a computer.

Further advantages of the present invention will become clear to the skilled person upon examination of the drawings and detailed description. It is intended that any additional advantages be incorporated therein.

### Description of the drawings

Embodiments of the present invention will now be described by way of example with reference to the accompanying drawings in which like references denote similar elements, and in which:
Figures 1-a and 1-b show a file organization of a 3D data in a hard disk drive and its spatial representation;
Figures 2-a and 2-b show a XY plane data representation in a data file;
Figures 3-a and 3-b show a YZ plane data representation in a data file;
Figures 4-a and 4-b show a XZ plane data representation in a data file;
Figure 5 is an illustration of two different representations of data chunking
Figures 6-a and 6-b show a block diagram of a digital data handling system in a preferred embodiment of the invention and in a second embodiment;
Figures 7-a and 7-b show a multi-resolution analysis of a 3D volume data;
Figure 8 illustrates a one-level wavelet transform processing;
Figure 9 illustrates three levels wavelet transform processing;
Figure 10 shows a flow diagram of an offline process in accordance with an embodiment of the present invention;
Figure 11 shows a flow chart of the steps of the offline process in accordance with an embodiment of the present invention;
Figure 12 shows a flow diagram of an online process for data loading in accordance with an embodiment of the present invention;
Figure 13 shows a flowchart of the steps of the online process for data loading in accordance with an embodiment of the present invention;
Figure 14 represents a data loading benchmark for a 2D plane;
Figure 15 represents a data loading benchmark for a 3D volume.

### Detailed description of the invention

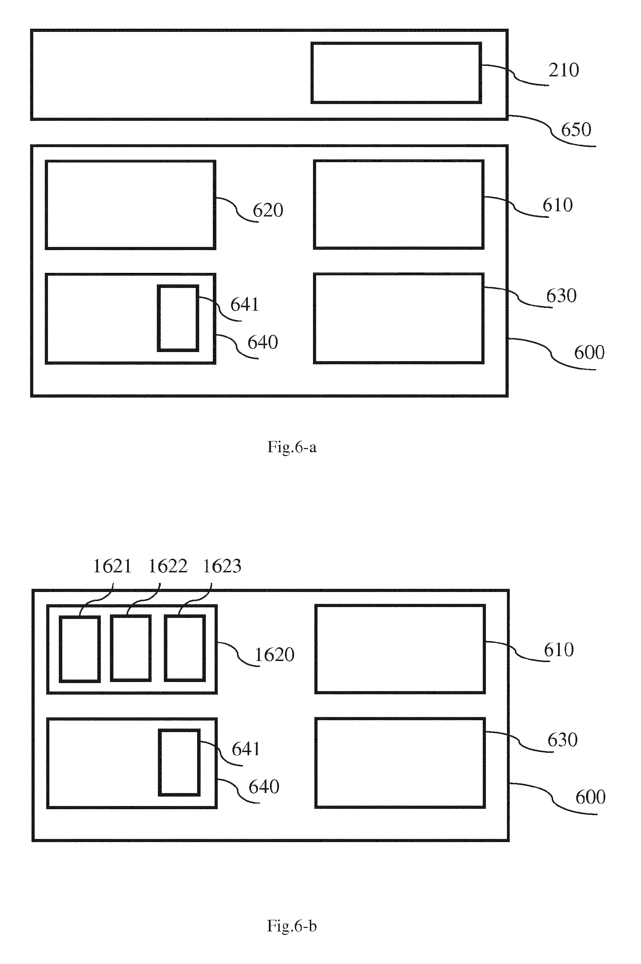

With reference first to figure 6-a, a block diagram of a computer device 600 for operating the present invention is depicted in accordance with a preferred embodiment. The computer device may be a general purpose computer or personal computer having a central unit (610) and a computer screen (not depicted). The computer device further includes a hard disk drive (HDD) (620) with a limited available storage capacity of 250 gigabytes (Gb) for example as a common capacity. The computer device (600) also includes a random access memory (RAM) (630) having its own capacity storage of 2 Gb for example. The computer device also includes a graphic card (640), having a video random access memory (VRAM) (641) which capacity is for example 512 megabytes (Mb). A scanning device (650) may be coupled to the hard disk drive of the computer device (600). The scanning device is used to acquire 3D data which are stored on the hard disk drive. In operation, the hard disk drive stores a huge volume of 3D data to describe for example a seismic scan. For a visualization of a 3D object, the central unit (610) allows loading the 3D object from the hard disk drive (620) into the RAM (630). Then the central unit (610) allows loading the data from RAM (130) into the VRAM (641). The graphic card (640) allows computing the final rendering and sending it for display on the computer screen.

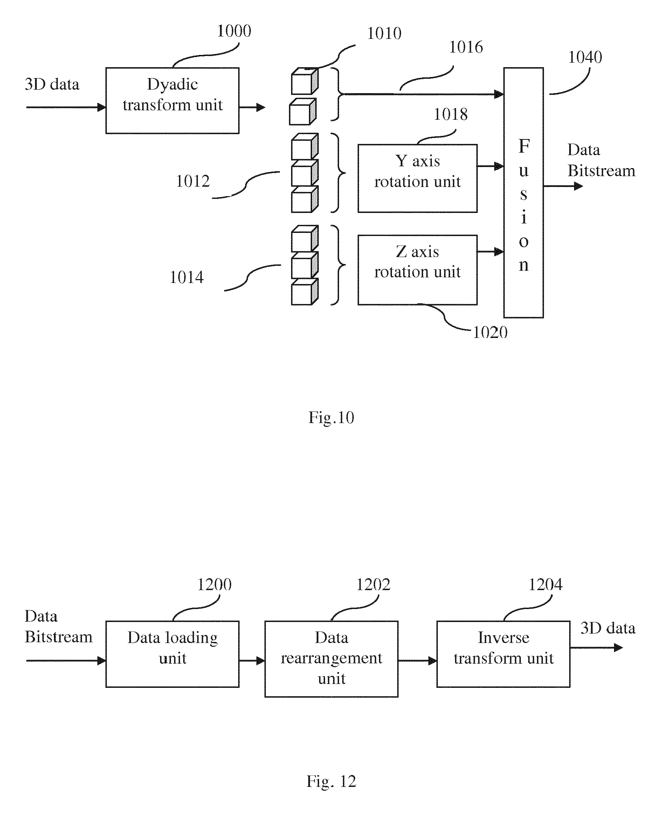

Figure 6-b shows a second embodiment of the invention, where identical numerals refer to identical components. The computer device 600 comprises a storage unit 1620 having a plurality of concurrent storage devices. In a preferred implementation, three hard disk drives (1621, 1622, 1623) are included in the storage unit. As it will be described later with reference to figures 10 to 13, in this configuration, seven high frequency sub-bands are distributed among the three disks for each wavelet transform level. Then each disk stores two or three different sub-bands corresponding to different orientations.

Going to figures 7-a and 7-b, a multi-resolution analysis of a 3D volume data is described. An original 3D object O₀ is decomposed (fig.7-a) into a first object O₁ of lower resolution, smaller size and having a set of associated details D₁ (high frequencies). The process of decomposition is applied on the resulting object O₁ and repeated up to the desired lower resolution On to get a multi-resolution representation of the original object. At the end of the decomposition process, the lowest version of the object On is obtained with a set of details D₁, D₂...Dn. Fig.7-b illustrates a synthesis process for reconstructing the initial object. The lowest version On of the object is filtered the corresponding set of details is added at each step. At the end of the synthesis process, the initial object O₀ is rebuilt. The analysis and synthesis processes are performed using one or more filters depending on the type of analysis. In a preferred embodiment, the well-known wavelet transform is used as a multi-scale transform function to compute the multi resolution analysis.

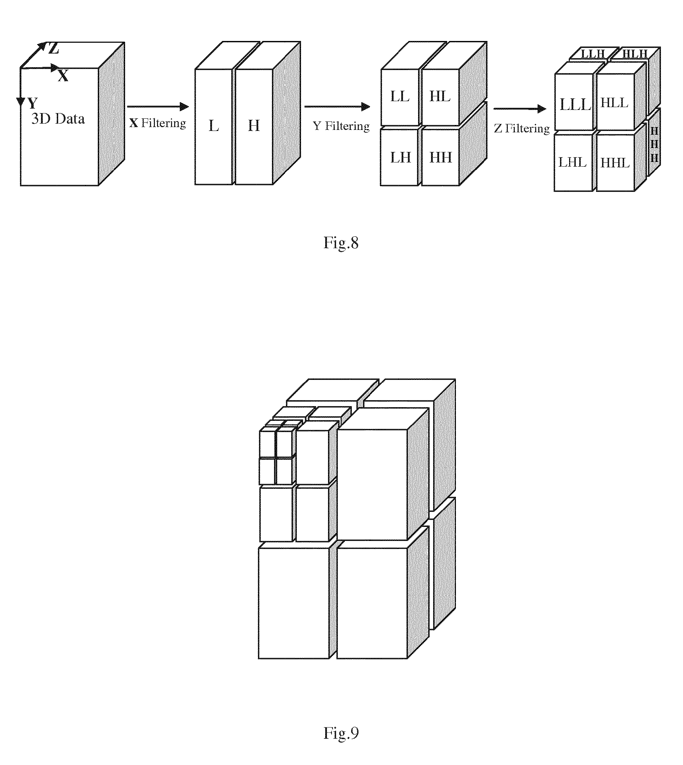

Going to figure 8 a one-level wavelet transform process of a 3D object is shown. In the illustrated example, a dyadic wavelet transform is used and at each filtering step the number of sub-bands is doubled. As shown, after the first 'X plan' filtering step of the 3D object, two sub-bands (L, H) are generated. After the 'Y plan' filtering step, four sub-bands (LL, HL, LH, HH) are generated. Finally, after the 'Z plan' filtering step, eight different sub-bands (LLL, HLL, HHL, LHL, LHH, HLL, LLH, HHH) are generated wherein one sub-band (LLL) representing the low frequency and the seven other sub-bands representing the high frequencies.

The present invention allows manipulating the data on a frequency analysis as opposed to the spatial approach of the prior art solutions. The person skilled in the art will appreciate that the main advantage of the frequency analysis is to spread the spatial information on all different frequency sub-bands. In order to load a specific area of a 3D volume in the spatial domain, the corresponding areas in the frequency sub-bands are loaded and spatial data are retrieved through an inverse transform. The different sub-bands are stored using 3 different patterns. Each pattern is optimized for a specific spatial orientation (X,Y,Z). A rotation of some sub-bands is applied in order to modify the storage pattern to have a faster sub-bands access.

In the preferred embodiment, the spatial to frequency domain transformation is described using the wavelet transform but any other techniques to perform a multi-resolution analysis can be used.

Figure 9 represents the 3-levels of wavelet transform of the 3D object. In order to perform the multi-level transform, only the low frequency sub-band (LLL) is required as the input at each level.

Going now to figure 10, a flow diagram of the offline process in accordance with an embodiment of the present invention is described. The offline process allows generating a new data set (Final bit stream) from the original data (3D data). A multi-resolution analysis (1000) is first applied on the original object. The multi-resolution analysis is preferably operated as previously described with reference to figure 7-a to spread the spatial data among different frequency sub-bands (1010, 1012, 1014). The sub-bands are next re-oriented according to the X, Y or Z axes (1016, 1018, 1020). Finally, a fusion unit (1040) allows assembling the different sub-bands wherein each different sub-band contains a specific header indicating its orientation (X, Y or Z plan) and its frequency type. Figure 10 illustrates without limitation the offline process for one level of wavelet transform. A final bit stream is generated and available for any further data processing or data visualization.

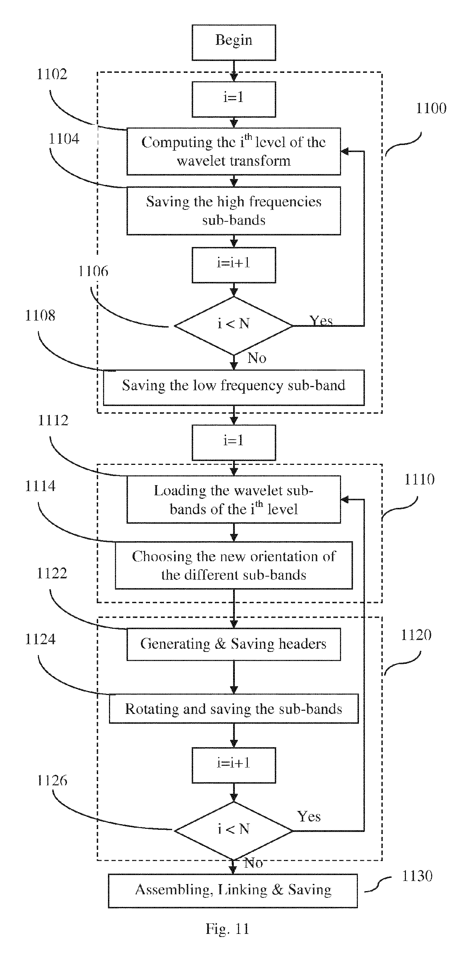

Figure 11 shows a flowchart of the steps performed for the offline process for a multilevel wavelet transform. On a first sub-process 1100, the N-levels wavelet transform operation is performed. The process begins by setting the level parameter 'i'. On step 1102, the process computes the wavelet transform for the i^{th} level. Next on step 1104, the process saves at the eight different sub-bands and the level parameter 'i' is incremented.

On next step 1106, the process checks if all 'N' levels of wavelet transform have been applied. If not, the process loops back to step 1102, otherwise continues to step 1108.

It is to be appreciated that the low frequency sub-band is not saved during each loop of the wavelet transform as it is further used for the i+1^{th} level of wavelet transform. Indeed, only the seven high frequencies sub-bands are saved for level 1 to level N-1 whereas all of the eight sub-bands are saved on step 1108 for the last level N.

Then the process enters a second sub-process 1110 to apply the different rotations on the different sub-bands. On step 1112, the process allows loading at each level 'i' the corresponding sub-bands into the computer memory. On next step 1114, the process allows determining the appropriate rotation for each sub-band. In a preferred approach, the choice of the rotation to be applied to each sub-band is done in order to balance the number of sub-bands per dimension. However, the skilled person would devise any other choice that best fits with the implementation.

The process then enters in a sub-process 1120. For each sub-band, the process allows generating 1122 a header file, to save the information indicating the rotation axis of the respective sub-band and the sub-band identification indicating the level and the sub-band number.

Alternatively, the process allows generating a single header file containing all the identification and rotation information of all sub-bands.

In yet another implementation, the header file is a predefined file which contains predefined rotation information to be applied to assigned sub-bands, and the step of generating the header file is not executed.

On next step 1124, the content of the current sub-band is rotated and saved in the hard disk drive.

The process next allows incrementing the level parameter 'i=i+1' and checking on step 1126 if all the 'N' levels have been processed. If not, the process loops back to step 1112, otherwise the process enters step 1130.

On step 1130, the process allows assembling the rotated and the non-rotated data sub-bands into a data bit stream with a link to the header files.

Finally, the data bit stream and the header files are stored for further processing or for data streaming.

At the end of the offline process, 'N' files corresponding to the 'N' levels of the wavelet transform have been generated and available for an online process to be initialized by a processing or visualization request.

Going to figure 12, a flow diagram of an online process for data loading in accordance with an embodiment of the present invention is now described. The online process allows retrieving a multi-dimensional data object using the different rotated sub-bands. This process can be performed locally for reconstructing a specific plane or a specific sub-volume. Moreover, the online process may be executed globally to reconstruct a whole 3D volume.

The online process may be executed for data visualization or any data processing purpose.

A data loading unit 1200 allows loading the data from the hard disk drive into the computer memory. A data rearrangement unit 1202 is coupled to the data loading unit to read the information from the headers of the files and to apply the respective inverse rotation to each sub-band content. An inverse multi-scale transform unit 1204 performs an inverse multi-scale transform operation on the data provided by the data rearrangement unit to generate the multi-dimensional data.

In a variant, the data sub-band identification and rotation information is predefined and the data rearrangement unit retrieves the information from the predefined file.

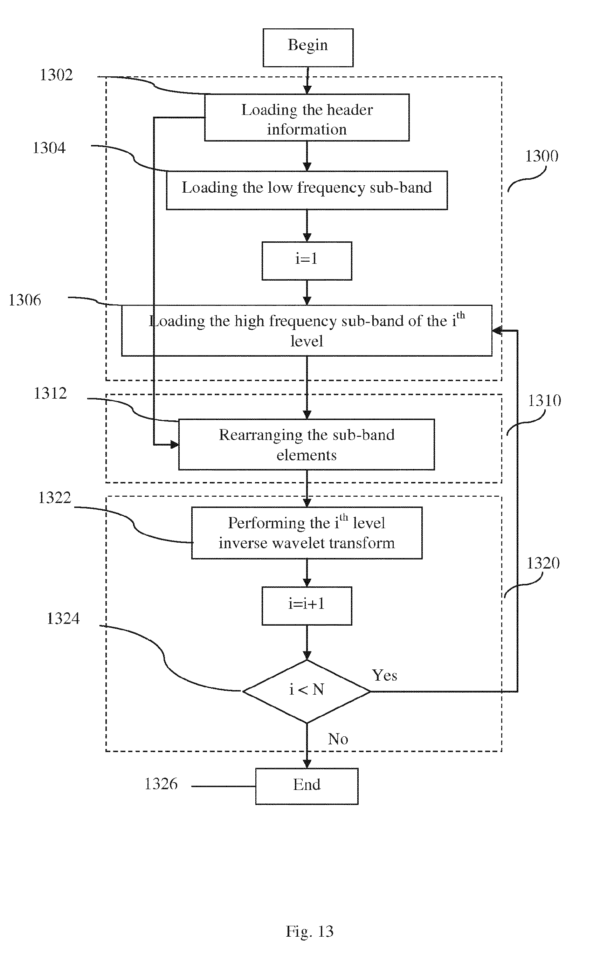

Figure 13 shows a flowchart of the steps performed for the online process. On a first sub-process 1300, all information related to the data requested for a processing or visualization is loaded. On step 1302, the header information of the data file is retrieved and loaded. On next step 1304 the low frequency sub-band is loaded and the level parameter 'i' is initialized. On next step 1306, the high frequency sub-bands of the current level are loaded.

The process enters a second sub-process 1310 to rearrange the data. On step 1312, an inverse rotation of each sub-band content is performed using the information of the header.

Then the process enters a third sub-process 1320. On step 1322, the process allows performing the inverse wavelet transform for the current level. The process next allows incrementing the level parameter 'i=i+1' and checking on step 1324 if all of the 'N' levels have been processed. If not, the process loops back to step 1306, otherwise the process ends (1326).

Advantageously, the method of the invention allows performing an inverse wavelet transform for an M level of wavelet transform with 'M < N' where N is the last level of the wavelet transform to accelerate the loading time especially when the loading is done for visualization purposes. Indeed, for huge 3D volume the resolutions of the different planes exceed easily the screen resolution. Contrary to the state-of-the-art methods where the original planes are loaded and a data sub-sampling is performed before the visualization, the present invention allows loading directly the appropriate resolution using the different levels of the wavelet transform. No data sub-sampling is then needed thereby greatly improving the loading time.

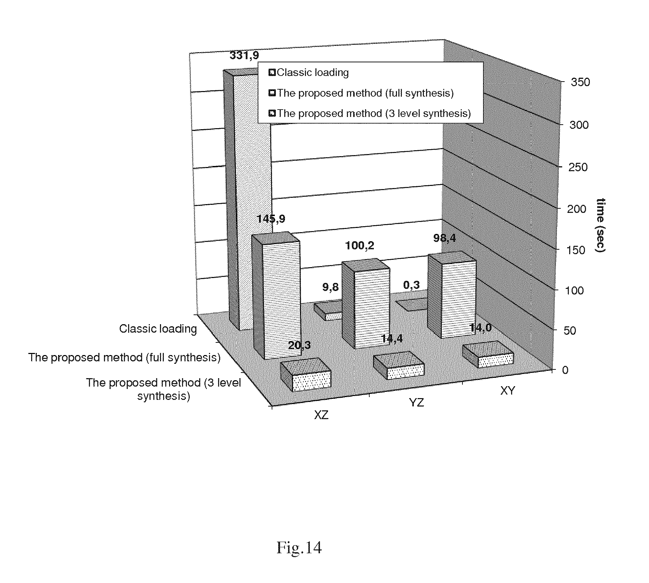

Figure 14 compares the loading time of the XY, YZ and XZ planes using the classic method (reading directly the planes from the original 3D volume), the method of the invention when using a full wavelet synthesis (up to the n^{th} level) and the method of the invention when performing only a 3 level synthesis. In the example, the original 3D volume has the following dimensions: 10400x6864x2080 and its size is equal to 276 Gigabytes. One can see that the method of the present invention gives for the different 2D planes a loading time which is near to the average time of the 3D plane.

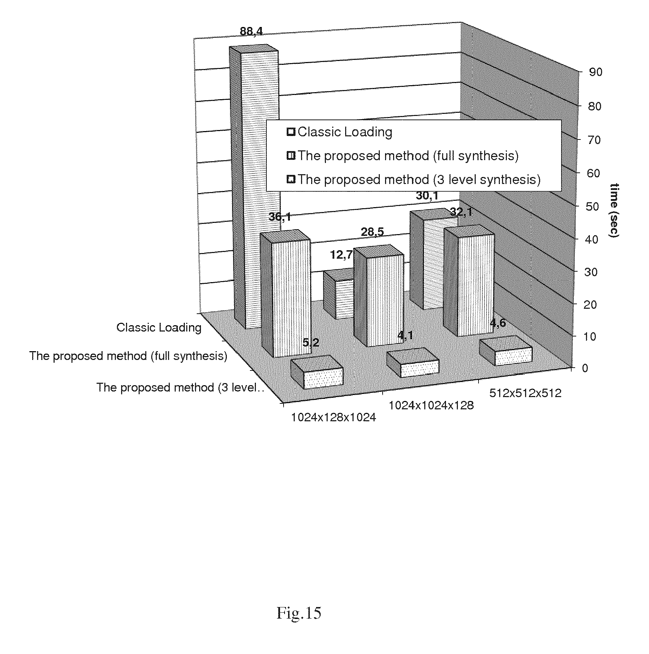

Figure 15 compares the loading time of 3 sub-volumes using the aforementioned three 3 methods : the classic method when reading directly the planes from the original 3D volume, the method of the invention when using a full wavelet synthesis and the method of the invention when performing only a 3 level synthesis. The 3 sub-volumes have the following dimensions: 1024x128x1024, 1024x1024x128 and 512x512x512 and the original 3D volume is the same as the one used for the 2D benchmark of figure 14.

One can notice that the 3 sub-volumes have the same number of voxels (134,217,728) but a different loading time for the classic method depending on the sub-volume orientation. The method of the invention gives for the different sub-volumes almost the same loading time which is near to the average time of the 3D sub-volume loading time. Advantageously, it is to be notice that the method of the present invention is independent from the storing pattern.

Finally, it is to be appreciated that the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

## Claims

1. A computer implemented method of storing a multi-dimensional digital data object, the method comprising the steps of:
- applying (1100) a multi-scale transform function to the multi-dimensional object to generate a plurality of high and low frequency data sub-bands;
- identifying (1110) at least one set of the high frequency data sub-bands to be rotated in one of the multi-dimensions;
- generating (1122) at least one header file containing the identification and rotation data sub-bands information;
- performing (1124) the rotation of the identified at least one set of high frequency data sub-bands;
- assembling (1130) the rotated and non-rotated data sub-bands into a data bit stream;
- linking (1130) the data bit stream with the at least one header file; and
- storing (1130) the data bit stream and the at least one header file.

2. The method of claim 1 wherein the multi-dimensional digital data object is a 3D object and the step of applying a multi-scale transform function consists in applying an n-levels filtering.

3. The method of claim 2 wherein the multi-scale transform function is a multi-level wavelet transform function and wherein the rotation step consists in rotating (1018) a first set and a second set of high frequency data sub-bands according to two dimensions among the three dimensions of the 3D object.

4. The method of anyone of claims 1 to 3 wherein the step of storing consists in storing the data bit stream in one (620) or several (1621, 1622, 1623) hard disk drives of the computer.

5. The method of anyone of claims 1 to 4 wherein the step of generating at least one header file consists in generating one header file for each data sub-band.

6. A computer implemented method of loading a multi-dimensional digital data object stored in the form of a data bit stream along with at least one header file according to the method of anyone of claims 1 to 5, the method comprising the steps of:
- identifying (1302) from the at least one header file the plurality of data sub-bands of the data bit stream;
- reading (1304, 1306) from the at least one header file the rotation information of each data sub-band;
- applying (1312) an inverse rotation to each data sub-band;
- applying (1322) an inverse multi-scale transform function on all the data sub-bands to reconstruct the multi-dimensional digital data object.

7. The method of claim 6 wherein the step of identifying the plurality of data sub-bands further comprising identifying the high and low frequency data sub-bands and wherein the step of applying an inverse rotation to each data sub-band further comprising the step of applying an inverse rotation to the high frequency data sub-bands.

8. The method of claim 6 or 7 wherein the step of applying a multi-scale transform function consists in applying an inverse wavelet transform to the high and low frequency data sub-bands.

9. A system for storing and/or loading a multi-dimensional digital data object comprising means adapted for carrying out each step of the method according to any one of the claims 1 to 8.

10. A computer readable medium having encoded thereon a computer program comprising instructions for carrying out the steps of the method according to any one of claims 1 to 8 when said computer program is executed on a computer.
